# EUROPEAN PATENT APPLICATION

(11) **EP 1 418 029 A1**
(43) Date of publication of application: **12.05.2004**
(21) Application number: 02730836.0
(22) Date of filing: 31.05.2002
(51) Int. Cl.: B26D 1/30

(54) **DEVICE AND METHOD FOR CUTTING INDUSTRIAL WASTE**

(30) Priority: 29.06.2001 JP 2001200238
(71) Applicant: Kabushiki Kaisha Sakato Kosakusho, Chiba-shi, Chiba 262-0012 (JP)
(72) Inventor: SAKATO, Seiichi KABUSHIKI KAISHA SAKATO KOSAKUSHO, Chiba-shi, Chiba 262-0012 (JP); SAKATO, Masayuki KABUSHIKI KAISHA SAKATO KOSAKUSHO, Chiba-shi, Chiba 262-0012 (JP); NAKANO, Jo, Kagoshima-shi, Kagoshima 891-0142 (JP); NAKAO, Katsumori KABUSHIKI KAISHA NAKAOGUMI, Amagasaki-shi, Hyogo 660-0874 (JP); WATANABE, Nobuaki KABUSHIKI KAISHA NAKAOGUMI, Amagasaki-shi, Hyogo 660-0874 (JP); MIYAMOTO, Masao KABUSHIKI KAISHA NISHI NIHON COMPR, Osaka-shi, Osaka 553-0001 (JP); MORIWAKI, Hiroyuki K. K. NISHI NIHON COMPRESSOR, Osaka-shi, Osaka 553-0001 (JP)
(74) Representative: Skone James, Robert Edmund
(86) International application number: PCT/JP2002/005364
(87) International publication number: WO 2003/002311

(57) **Abstract**

The present invention provides an industrial waste cutting apparatus for cutting fi nel y the industrial wastes generated from such as industrial products of a great variety of types and domestic products such as used materials and old furniture, regardless of whether they are soft or hard, so that they can be easily disposed off, and it is an object thereof to cut soft materials, which are especially difficult to cut, with a very high efficiency. The apparatus comprises a fixed jaw A provided with a through portion 2, a movable cutting body B which comprises a mountain-shaped cutting portion 6 that penetrates to an intermediate location in the depth direction of the through portion 2 and which is free to swing with respect to the fixed jaw A, and a packing material Wo which is packed into through portion 2, allows the mountain-shaped cutting portion 6 to penetrate into the through portion 2, and can apply a pressure with an appropriate pressing force to both sides sections of a cutting edge of the mountain-shaped cutting portion 6.

## Description

### TECHNICAL FIELD

The present invention relates to an industrial waste cutting apparatus capable of cutting finely industrial wastes generated from such as industrial products of a great variety of types, domestic products such as used materials and old furniture, regardless of whether they are soft or hard, so that they can be easily disposed off, and to a cutting method with such an apparatus.

### BACKGROUND ART

In recent years, industrial wastes have been appearing in a great variety of types including industrial products and domestic products such as old material, old furniture, and the like, and large amounts thereof have been discarded. In order to dispose of such industrial wastes with good efficiency, they have to be cut into several fine fractions. Cutting apparatuses of a variety of types designed for such fine cutting of industrial wastes have been disclosed, but most of them are used for cutting comparatively hard wastes. For example, it can be said that construction plates have a stable shape and can be cut easily. Furthermore, synthetic resin products such as plastics also can be cut comparatively easily. In particular, even in the case of hard materials, which are to be cut, increasing the strength of the cutters makes it possible to conduct the cutting operation with a very high efficiency.

As mentioned hereinabove, because comparatively hard wastes such as synthetic resins (plastics and the like) and metal materials have a stable shape, they can be cut in a simple manner. However, soft materials also constitute a rather significant portion of industrial wastes. Examples of such soft wastes include vinyl polymers, rubbers, glass wool, and asbestos products, hoses, industrial sheets, industrial nets, and tires. Thus, the materials which are to be cut can be generally classified into the following groups: ① hard thick materials, ② hard thin materials, ③ soft thick materials, and ④ soft thin materials. The hard thick materials of group ① are the easiest to cut, as was mentioned hereinabove.

Examples of hard thick materials of group ① include thick plates, wallboards, and furniture. Further, examples of hard thin materials of group ② include products manufactured from thin metal sheets, lockers, and cabinets. Those products are manufactured from thin metal sheets which are bent so as to assume the shape almost identical to the outer shape of the cutter, rather than being cut during cutting operation. Further, examples of hard thin materials of group ③ include thermal insulators made from rubber sheets, glass wool, and the like, and examples of soft thin materials of group ④ include nets, sheets, and the like.

We can say that materials of the aforesaid groups ②, ③, and ④ are difficult to cut. This is because soft materials (or hard, but thin materials) are easily deformed and assume the shape almost identical to that of the cutter and easily stick the cutter during cutting operation. For this reason, industrial wastes composed of soft materials are very difficult to cut. Further, as the wastes of soft materials are cut, the soft materials, which are not cut, gradually adhere to the cutter of the cutting apparatus or become tangled therewith, this material covers the cutter and, in the worst case, can make it impossible to continue the cutting operation. It is an object of the present invention to prevent the situation in which wastes of soft materials adhere to a cutter or become tangled therewith, thereby degrading cutting performance, when such wastes are cut.

### DISCLOSURE OF THE INVENTION

The present invention provides an industrial waste cutting apparatus comprising a fixed jaw A provided with a through portion 2, a movable cutting body B which comprises a mountain-shaped cutting portion 6 that penetrates to an intermediate location in the depth direction of the through portion 2 and which is free to swing with respect to the fixed jaw A, and a packing material Wo which is packed into through portion 2, allows the mountain-shaped cutting portion 6 to penetrate into the through portion 2, and can apply a pressure with an appropriate pressing force to both sides sections of a cutting edge of the mountain-shaped cutting portion 6. With such an apparatus, wastes generated from such as industrial products of a great variety of types and domestic products such as used materials and old furniture, regardless of whether they are soft or hard, can be finely cut so that they can be easily disposed off.

Describing the effect in greater detail, the packing material Wo is packed into the through portion 2 of the fixed jaw A. Therefore, when the material W which is to be out is sandwiched between the fixed jaw A and the movable cutting body B and operation is conducted so as to close the movable cutting body B in the direction of the fixed jaw A, in the first several swinging movements of the movable cutting body B, the material W which is to be cut is repeatedly packed into the through portion 2 and no cutting is conducted. However, once part of the material W which is to be cut has been sufficiently packed into the through portion 2, the packed packing material Wo produces a counterforce R with respect to the shear force F of the mountain-shaped cutting portion 6 and cutting of the material W can be easily conducted.

Furthermore, each time the material W is cut, the packing material Wo located inside the through portion 2 is discharged by small portions from the through portion 2 to the outside of the fixed jaw A under the effect of a pushing pressure crated by the shear force F of the mountain-shaped cutting portion 6 in the through portion 2. Therefore, even if the cutting operation continues, the amount of the packing material Wo inside the through portion 2 is not increased and the packing material does not harden therein and does not hinder the penetration of the mountain-shaped cutting portion 6 into the through portion 2.

As described hereinabove, if the material which is to be cut is soft, the packing material Wo in the through portion 2 serves as a receiving base in cutting with the mountain-shaped cutting portion 6 and cutting operation of the material W can be readily conducted. Furthermore, if the material which is to be cut is a hard material, because the shape thereof is stable, it can be cut by usual cutting with the mountain-shaped cutting portion 6. Thus, the industrial waste cutting apparatus in accordance with the present invention is applicable to cutting of industrial wastes of practically all types, demonstrating good operability.

Furthermore, in accordance with the present invention, in the industrial waste cutting apparatus in which the two inner wall surfaces 2a, 2a in the width direction of the through portion 2 are formed so as to expand slightly from the penetration side of the mountain-shaped cutting portion 6 in the downward direction of the fixed jaw A, the packing material Wo that adhered in a packed state inside the through portion 2 and the material to be cut W, W ... that was stuffed into the through portion thereafter can be easily removed therefrom. Thus, when the industrial waste cutting apparatus is handled and cleaned after the cutting operation has been completed, because the downward side of the fixed jaw A of the through portion 2 expands, the material to be cut W, W, ... and the packing material Wo that adhered in a packed state inside the through portion 2 can be removed from below the fixed jaw A and maintenance of the through portion 2 is facilitated.

Furthermore, in accordance with the present invention, in the industrial waste cutting apparatus in which the two inner wall surfaces 2a, 2a in the width direction of the through portion 2 are formed so that this portion narrows slightly from the penetration side of the mountain-shaped cut ti ng portion 6 in the downward direction of the fixed jaw A, the packing material Wo that adhered in a packed state inside the through portion 2 is prevented from falling down from the through portion 2 during cutting of the material W which is to be cut, because the through portion becomes narrower in the downward direction. As the same time, the counterforce acting on the mountain-shaped cutting portion 6 is increased and, therefore, cutting efficiency can be further increased.

Describing this effect in greater detail, because the inner surfaces of the through portion 2 in the width direction thereof are formed so that this portion becomes narrower from the side where the mountain-shaped cutting portion 6 penetrates therein toward the lower side of the fixed jaw A, the packing material Wo that has adhered in a packed state is prevented from falling down even when the mountain-shaped cutting portion 6 has penetrated into the through portion 2. At the same time, the counterforce acting on the mountain-shaped cutting portion 6 is further increased and when the mountain-shaped cutting portion 6 cuts the material W which is to be cut, the packing material Wo that has adhered in a packed state inside the through portion 2 plays the role of a good cushion material, thereby improving the cutting ability of the mountain-shaped cutting portion 6 and making it possible to improve cutting performance of the material W.

Furthermore, in accordance with the present invention, in the industrial waste cutting apparatus in which the cross-sectional shape of the cutting edge 6t of the mountain-shaped cutting portion 6 is formed to be sharp at the same slope angle at the two cutting edge surfaces 6t₁ in the width direction, not only the soft material W which is to be cut, but also the hard material W can be cut effectively.

Furthermore, in accordance with the present invention, in the industrial waste cutting apparatus in which the two inner wall surfaces 2a, 2a of the through portion 2 serve as resistance surfaces 2a₁, 2a₁, when the soft and elastic materials W, W,... are stuffed into the through portion 2, they can easily adhere to the inner wall surfaces 2a, 2a.

Furthermore, in accordance with the present invention, in the industrial waste cutting apparatus in which an auxiliary cutter 13 is provided in the vicinity of the pivot portion of the movable cutting body B and the fixed jaw A, it is possible to cut very hard items that cannot be cut with the mountain-shaped cutting portion 6. For example, it is possible to conduct cutting of comparatively hard materials such as iron bars, small iron frames, and the like.

Furthermore, in accordance with the present invention, in the industrial waste cutting apparatus in which the mountain-shaped cutting portion 6 is formed to have an almost arc-wise shape along the cutter length direction, uniform cutting conditions can be obtained in any position along the cutter length direction.

Furthermore, in accordance with the present invention, in the industrial waste cutting apparatus in which the mountain-shaped cutting portion 6 is formed to have an almost polygonal shape along the cutter length direction, a plurality of angular portions are present at the cutting edge along the cutter length direction, and those angular portions provide for good cutting into the material W which is to be cut and can improve cutting operation.

Furthermore, in accordance with the present invention, in the industrial waste cutting apparatus in which the mountain-shaped cutting portion 6 is formed to have an almost triangular shape along the cutter length direction, the apex of the cutting edge of the mountain-shaped cutting portion 6 that was formed to have a triangular shape forms the acutest angular portion. As a result, cutting into the material W which is to be cut can be further improved and even very soft materials W can be cut.

Furthermore, in accordance with the present invention, in the industrial waste cutting apparatus in which the packing material Wo is composed of a material with a large friction coefficient, when the material W is cut, the packing material Wo creates large friction with respect to the material W which is being cut and the mountain-shaped cutting portion 6 and the cutting performance of the mountain-shaped cutting portion 6 can be further improved.

Furthermore, in accordance with the present invention, in the industrial waste cut-ting apparatus in which the packing material Wo has a compressive strength of 300 N/mm² to 1000 N/mm² and a Young's modulus of 300 N/mm² to 5000 N/mm², when a soft material is cut, the best cutting ability can be obtained regardless of the material thickness.

Paper, plastic sheets, or cloth are the materials with such properties. The packing material Wo having such properties deforms flexibly in response to the penetration of the mountain-shaped cutting portion 6 and when the mountain-shaped cutting portion 6 is pressed to a certain degree into the packing material, no deformation occurs there after and the material W is cut, while the shear force F from the mountain-shaped cutting portion 6 is being stopped, thereby making it possible to conduct a very effective cutting operation.

Furthermore, in accordance with the present invention, in the industrial waste cutting apparatus in which the packing material Wo is a sheet-like member, the packing material can be easily packed into the through portion 2 and the resistance force acting on the mountain-shaped cutting portion 6 can be set to an appropriate state.

The present invention also provides a cutting method with an industrial waste cutting apparatus, comprising the steps of packing a packing material Wo which allows a mountain-shaped cutting portion 6 to penetrate into a through portion 2 and can apply a pressure with an appropriate pressing force to both sides sections of a cutting edge of the mountain-shaped cutting portion 6 of an industrial waste cutting apparatus comprising a fixed jaw A provided with the through portion 2 and a movable cutting body B which comprises the mountain-shaped cutting portion 6 that penetrates to an intermediate location in the depth direction of the through portion 2 and which is free to swing with respect to the fixed jaw A, sandwiching a material W, which is to be cut, between the fixed jaw A and the movable cutting body B, allowing the mountain-shaped cutting portion 6 to penetrate into the through portion 2, placing the material W, which is to be cut, on the packing material Wo, and cutting the material W, which is to be cut, with the mountain-shaped cutting portion 6. With such a method, cutting of the material W consisting of a soft (flexible) substance can be conducted with an especially high efficiency.

Describing this effect in greater detail, because the packing material Wo is packed in advance into the through portion 2, a cutting base of the mountain-shaped cutting portion 6 is created in the section of the through portion 2 of the fixed jaw A, and cutting of the soft material W can be conducted by sandwiching the material W, which is to be cut, between the fixed jaw A and the movable cutting body B and causing the mountain-shaped cutting portion 6 to penetrate to the two inner wall surfaces 2a, 2a. As a result, cutting operation of the material W, W, ... can be conducted with a very high efficiency.

### BRIEF DESCRIPTTON OF THE DRAWINGS

FIG. 1A is a side view illustrating the present invention in a state in which the movable cutting body is open with respect to the fixed jaw;
FIG. 1B is a side view, with a partial section, illustrating the present invention in a state in which the movable cutting body is closed with respect to the closed fixed jaw;
FIG. 2A is a perspective view illustrating the present invention;
FIG. 2B is a perspective view illustrating the state in which the present invention is used;
FIG. 3A is a perspective view of the fixed jaw and packing material;
FIG. 3B is a perspective view of the movable cutting body;
FIG. 4A is a partial end view of the ma in portion of the apparatus in accordance with the present invention;
FIG. 4B is a partial end view of the end surface in a state in which the mountain-shaped cutting portion is separated from the fixed jaw;
FIG. 4C is an expanded cross-sectional view of the main portion of the fixed jaw in a state in which the packing material was packed into the through portion;
FIG. 5A is an operation diagram showing how the packing material is packed into the through portion by the mountain-shaped cutting portion;
FIG. 5B is an operation diagram showing the packing material packed into the through portion;
FIG. 6 is an operation diagram showing how the material, which is to be cut, is cut on the packing material packed into the through portion;
FIG. 7 is an operation diagram showing how the material, which is to be cut, is pressed by the mountain-shaped cutting portion into the packing material packed into the through portion and how a counterforce is generated with respect to the shear force of the mountain-shaped cutting portion;
FIG. 8 is a cross-sectional view illustrating the state in which the material, which is to be out, further bites into the through portion and is cut by the compressive stresses generated between the cutting edge of the mountain-shaped cutting portion and the material, which is to be cut, that was packed into the through portion;
FIG. 9 is an expanded cross-sectional view illustrating the state in which the material, which is to be cut, was cut by the compressive forces generated between the cutting edge of the mountain-shaped cutting portion and the material, which is to be cut, that was packed into the through portion;
FIG. 10A is a schematic operation diagram illustrating the state of cutting the material, which is to be cut, in accordance with the present invention;
FIG. 10B is a schematic operation diagram illustrating the stresses generated in each portion during cutting;
FIG. 11 is a table illustrating physical properties and evaluation of candidate materials for the packing material;
FIG. 12 is a graph illustrating the behavior (relation between strains and compression) of the candidate packing materials when a cutting portion is pressed thereinto;
FIG. 13A is a cross-sectional view illustrating an embodiment in which the through po rti on gradually expands downward from the cutting operation surface of the fixed jaw;
FIG. 13B is a cross-sectional view illustrating the state in which the through portion of the embodiment shown in FIG. 13A was stuffed with the material which is to be cut;
FIG. 14A is a cross-sectional view illustrating an embodiment in which the through portion gradually narrows downward from the cutting operation surface of the fixed jaw;
FIG. 14B is a cross-sectional view illustrating the state in which the through portion of the embodiment shown in FIG. 14A was packed with the material which is to be cut;
FIG. 15A is a schematic view of the end surface of an embodiment of the resistance surface formed on the inner wall surface of the through portion;
FIG. 15B is a schematic view of the end surface of another embodiment of the resistance surface formed on the inner wall surface of the through portion;
FIG. 15C is a schematic view of the end surface of yet another embodiment of the resistance surface formed on the inner wall su rf ace of the through portion;

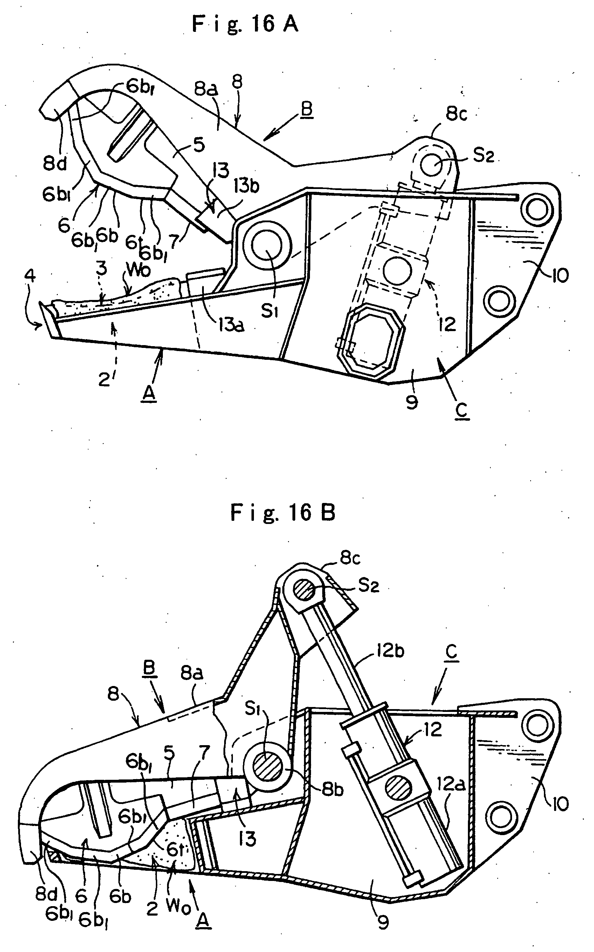

FIG. 16A is a side view illustrating the present invention in a state in which the movable cutting body equipped with a mountain-shaped cutting portion of another embodiment is open with respect to the fixed jaw;
FIG. 16B is a side view, with a partial section, illustrating the present invention in a state in which the movable cutting body is closed with respect to the closed fixed jaw;
FIG. 17A is a side view illustrating the state in which the movable cutting body equipped with a mountain-shaped cutting portion of yet another embodiment is open with respect to the fixed jaw; and
FIG. 17B is a side view, with a partial section, illustrating the state in which the movable cutting body is closed with respect to the closed fixed jaw.

### BEST MODE FOR CARRYING OUT THE INVENTION

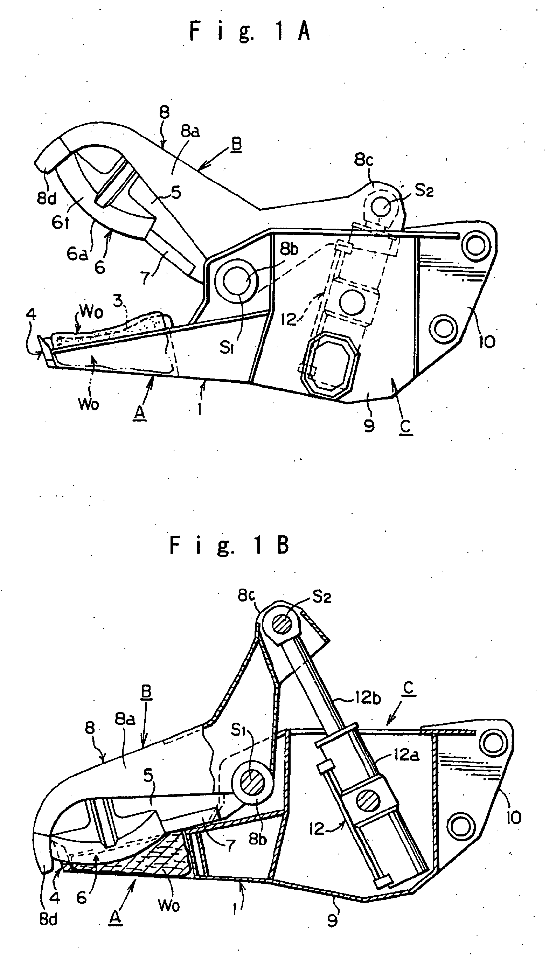

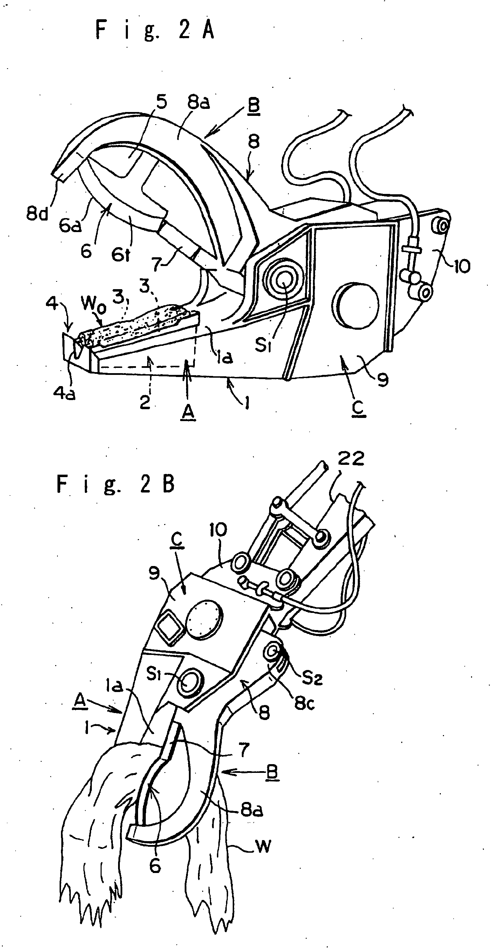

The embodiments of the present invention will be described below based on the appended drawings. The structure in accordance with the present invention, as shown in FIGS. 1A, 1B, and 2, is mainly composed of a fixed jaw A, a movable cutting body B, and a drive portion casing C. The fixed jaw A is connected to the drive port ion casing C. The movable cutting body B is pivotally supported by the drive portion casing C so that it is free to swing. The movable cutting body B can be closed and opened above the fixed jaw A. A hydraulic cylinder 12 installed inside the drive portion casing C serves as a drive force for the operation of the movable cutting body B. The distal end of a piston rod 12b of the hydraulic cylinder 12 is connected to the movable cutting body B (see FIG. 1B).

The industrial waste cutting apparatus is mounted for operation on the distal end of a boom 22 of a construction vehicle such as a hydraulic shovel. Furthermore, the industrial wastes as referred to herein are not limited to wasted discharged from production sites such as plants or construction sites and also include bulky wastes such as electric products or furniture discarded from homes or offices. Examples of such wastes include wallpaper, piping hoses, thermally insulating material, carpets, nets, electric cables, tires, tatami, tin sheets, and glass wool.

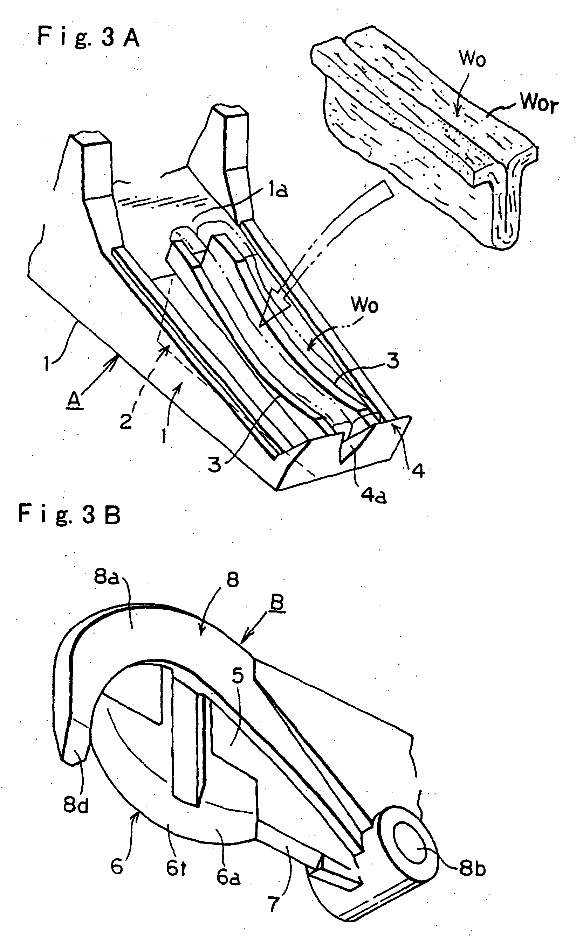

The fixed jaw A is composed mainly of a jaw portion 1 and a through potion 2. The shape of the jaw portion 1 is such that the cross-sectional area thereof decreases gradually and the jaw portion becomes thinner toward the distal end thereof from the side where it is connected to the drive portion casing C. In the jaw portion 1, the surface facing the movable cutting body B, that is, the surface which cuts the material W, which is to be cut, together with the movable cutting body B is called a cutting operation surface 1a (see FIG. 3A).

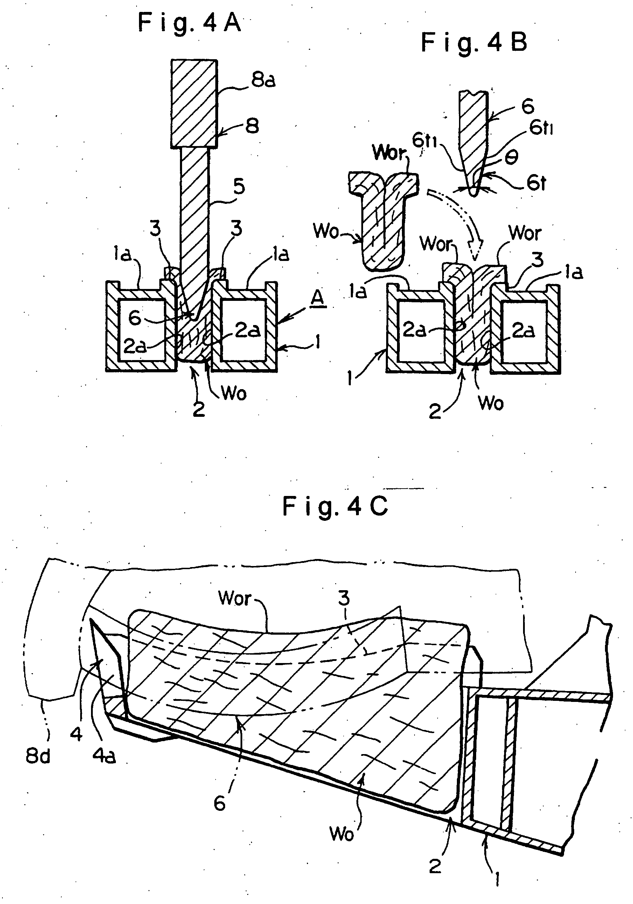

The through portion 2 is formed as a long hole or a groove along the longitudinal direction of the jaw portion 1. More specifically, it has the shape close to that of a rectangular parallelepiped extending in the longitudinal direction of the jaw portion 1, and in a state in which the below-described movable cutting body B is closed, a mountain-shaped cutting portion 6 penetrates into the through portion. The inner side surfaces on both sides in the width direction of the through portion 2, as shown in FIG. 4, are called the inner wall surf aces 2a, 2a. The inner wall surfaces 2a, 2a are parallel to each other, and the mountain-shaped cutting portion 6 penetrates between the two inner wall surfaces 2a, 2a (see FIG. 4A). The through portion 2 is packed with the below-described packing material Wo.

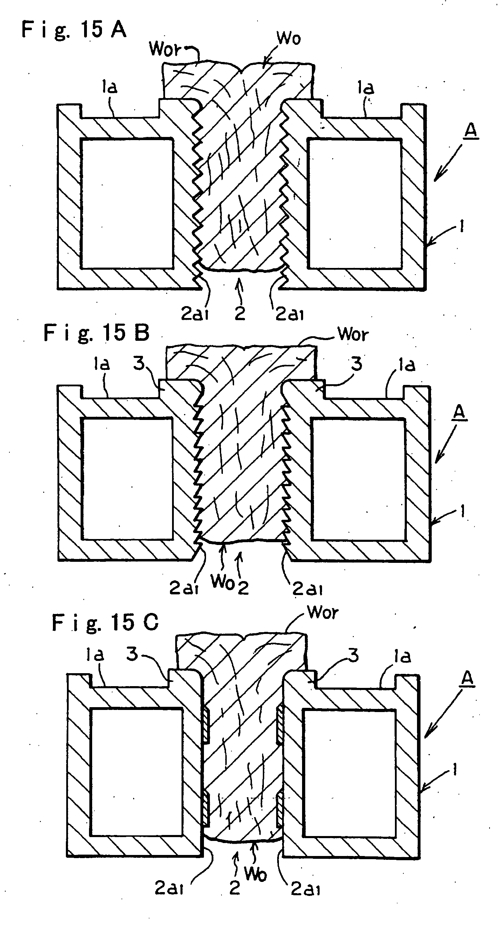

There is an embodiment in which the resistance surfaces 2a₁, 2a₁ are formed on respective inner wall surfaces 2a, 2a. The resistance surfaces 2a₁, 2a₁ are formed to have a cross section in the form of a triangular peaks or saw teeth. The resistance surfaces 2a₁ are formed for the purpose of increasing the resistance so that the packing material Wo can be easily retained inside the through portion 2 when the packing material Wo is packed thereinto and also with the object of preventing the material W, which is to be cut, from falling out of the through portion 2. The resistance surfaces 2a₁, 2a₁ may be such that the cross-sectional shape thereof is composed of a plurality of triangular peaks (see FIG. 15A) or of saw teeth (see FIG. 15B). In an alternative embodiment, plate-like pieces are secured to both inner wall surfaces 2a, 2a, thereby forming peaks and valleys in the cross-sectional shape of the inner wall surfaces 2a and creating the resistance surfaces 2a₁ ( see FIG. 15C).

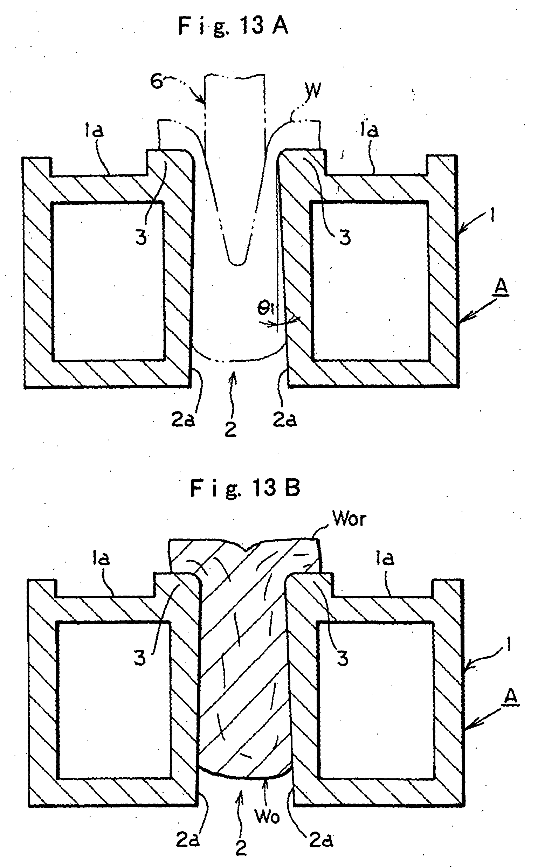

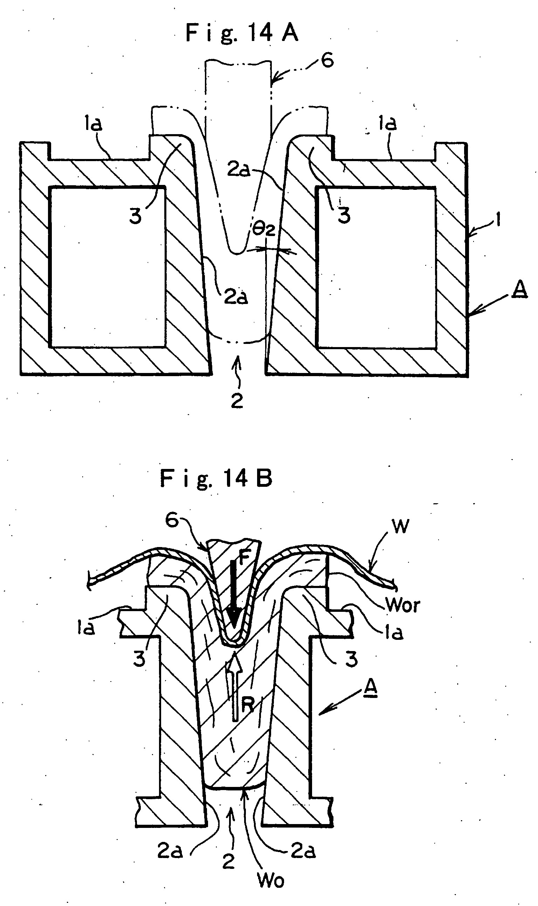

The two inner wall surfaces 2a, 2a are formed to be parallel, as was mentioned hereinabove, but in a separate embodiment, as shown in FIGS. 13A, 13B, the inner wall surfaces 2a, 2a may be provided with a taper with a slightly expanding angle θ₁ from the penetration side of the mountain-shaped cutting portion 6, that is from the cutting operation surface 1a, toward the zone below (can be also said "outside" ) the fixed jaw A, or with a taper with a slightly narrowing angle θ₂ from the cutting operation surface 1a toward the zone below (can be also said "outside") the fixed jaw A, as shown in FIGS. 14A, 14B.

Cutting support members 3, 3 are formed above the cutting operation surface 1a and on both sides in the width direction of the through portion 2. The cutting support members 3, 3 are formed to have a length almost equal to that of the through portion 2 along the longitudinal direction of the through portion 2. When the fixed jaw A and the movable cutting body B are closed and cutting operation is carried out, the two cutting support members 3, 3 bite into the material W, which is to be cut, and prevent the material W from shifting or moving randomly, such a movement making it difficult to conduct cutting. The central portions of the cutting support members 3, 3 in the longitudinal direction thereof are recessed to have a flattened almost circular arc-wise shape. The surfaces facing the two cutting support members 3, 3 serve as the aforesaid inner wall surfaces 2a, 2a.

Furthermore, a fixed distal end cutter 4 is formed at the distal end of the jaw portion 1. The fixed distal end cutter 4 is a plate-like member mounted almost perpendicular to the longitudinal direction of the jaw portion 1. A notch-like groove 4a which is cut to have an almost V-like shape along the side of the movable cutting body B is formed in the central location in the width direction of the fixed distal end cutter (see FIG. 3A). Furthermore, a portion close to the apex of the fixed distal end cutter 4 is sharpened to have an acute shape (see FIG. 1A, FIG. 3A). The fixed distal end cutter 4 prevents the material W, which is to be cut, from falling out from between the fixed jaw A and the movable cutting member B when the cutting operation is carried out with the fixed jaw A and the movable cutting member B.

Further, as shown in FIGS. 1, 2, and 3B, the movable cutting body B is composed of a cutting unit 5, the mountain-shaped cutting portion 6, an auxiliary cutting portion 7, and a movable frame 8. Further, a reinforcing portion can be obtained in the cutting unit 5 by forming a flat groove-like recess in the thickness direction or, if necessary, reinforcing members such as ribs can be formed. The mountain-shaped cutting portion 6 and auxiliary cutting portion 7 are formed integrally and continuously in the cutting unit 5, thereby creating a section for performing cutting. The outer peripheral portion of the cutting unit 5 is surrounded by the frame unit 8a of the movable frame 8. The movable frame 8 is formed to have a very high strength so as to withstand readily the cutting operation. A swinging base 8b formed at the movable frame 8 is pivotally linked to the drive portion casing C. This pivotal support section is called a pivot portion S₁ ( see FIGS. 1A, 1B).

Furthermore, a cylinder connection portion 8c is formed in the movable frame 8. The cylinder connection portion 8c is pivotally connected to a hydraulic cylinder 12, and the movable cutting body B is operated in a swinging mode, with the hydraulic cylinder 12 as a drive source. The connection section of the cylinder connection portion 8c and the hydraulic cylinder 12 is called a pivot portion S₂. Furthermore, a distal end hook 8d is formed at the free distal end of the movable frame 8, and the material W, which is to be cut, is prevented by the distal end hook 8d from falling out from between the fixed jaw A and the movable cutting body B when the cutting operation is conducted.

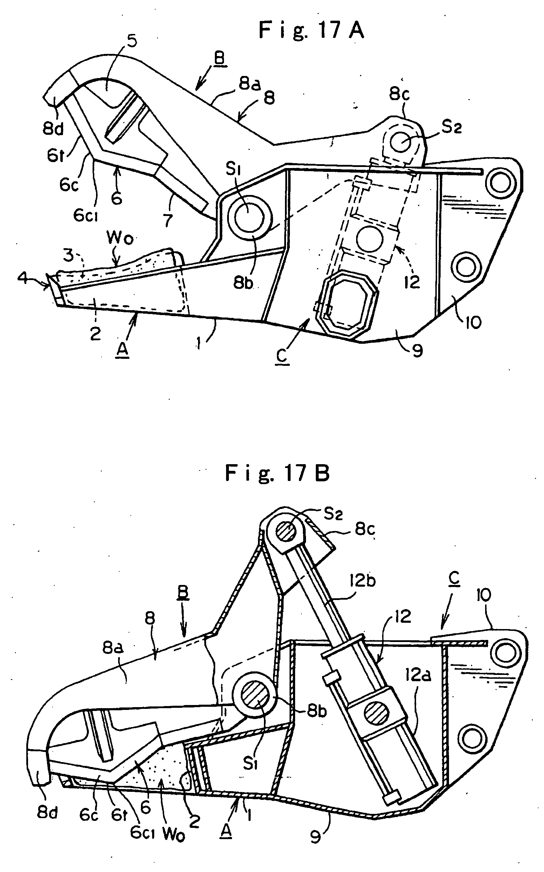

Furthermore, an auxiliary cutter 13 is mounted, as shown in FIGS. 17A, 17B, on the section of pivot portion S₁ of the fixed jaw A and the movable cutting body B, thereby making it possible to cut hard materials such as iron bars. The auxiliary cutter 13 is composed of a fixed cutter portion 13a formed at the fixed jaw A and a movable cutter portion 13b formed at the movable cutting body B. When the movable cutting body B is moved, the fixed cutter portion 13 a and the movable cutter portion 13 b cross each other and cut iron bars, iron frames, and the like.

Further, the mountain-shaped cutting portion 6 is formed to protrude toward the fixed jaw A, as shown in FIGS. 1A, 2A, and designed to penetrate into the through portion 2, as described hereinabove. The cutting edge 6t of the mountain-shaped cutting portion 6 is formed so that the thickness thereof gradually decreases toward the outer edge. The cutting edge 6t, that is, the distal end section, is formed so that the cross section thereof perpendicular to the cutter length direction has an almost semicircular shape.

The two cutting edge surfaces 6t₁, 6t₁ constituting both surfaces in the thickness direction at the location of the cutting edge 6t are formed so as to have the same slope angle, and the angle θ formed by the cutting edge surfaces 6t₁, 6t₁ is from about 20 degrees to about 40 degrees. More specifically, it is preferred that the cutting edge angle θ be 30 degrees. Furthermore, in a state in which the fixed jaw A and the movable cutting body B are closed, the aforesaid mountain-shaped cutting portion 6 penetrates into the through portion 2, and the vicinity of the outer edge in the cutter length direction penetrates into a notch-like groove 4a of the fixed distal end cutter 4.

The shape of the mountain-shaped cutting portion 6 can be of a plurality of types. The first type is an arc-wise mountain-shaped cutting portion 6a with the shape of an arc. More specifically, the cutting portion is formed so as to have the shape of a flat arc (see FIGS. 1A, 3B) with the largest protrusion in the central zone thereof, along the cutter length direction (longitudinal direction of the cutter). Because mountain-shaped cutting portion 6 of this type has an arc-wise shape along the cutter length direction, there are no angles along the cutter length direction and the shear force of the cutter is the same in all the locations in the cutter length direction.

The second shape type of the mountain-shaped cutting portion 6 is represented by a polygonal cutting portion 6b which is formed to assume a polygonal almost semicircular shape shown in FIGS. 17A, 17B . In the polygonal mountain-shaped cutting portion 6b, a plurality of linear cutting edge portions with different inclinations are arranged in succession. In the mountain-shaped cutting portion 6 of this type the adjacent linear cutting edge portions 6b₁, 6b₁ are arranged in series and form appropriate angles therebetween. In the embodiment shown in the figure, a total of four linear cutting edge portions 6b₁, 6b₁ ... are formed in succession, and there are three angular portions between the respective adjacent linear cutting edge portions 6b₁, 6b₁. The polygonal mountain-shaped cutting portion 6b conducts cutting of the material W, which is to be but, by a configuration of a plurality of linear cutting edge portions 6b₁, 6b₁, ... and a plurality of angular portions formed thereby.

Further, the third shape type of the mountain-shaped cutting portion 6 is represented by a triangular mountain-shaped cutting portion 6c which is formed to have an almost triangular shape, as shown in FIGS. 18A, 18B. In the triangular mountain-shaped cutting portion 6c, a cutting edge 6t in the location of a vertical angle 6c₁ thereof is the sharpest portion, and the cutting edge 6t in the location of a vertical angle 6d₁ bites into the material W, which is to cut, easier than the above-described mountain-shaped cutting portions 6 of other two types.

The relation between the dimensions of the mountain-shaped cutting portion 6 and through portion 2 will be described below. The inner size of the through portion 2 in the width direction thereof is such that the thickest portion of the mountain-shaped cutting portion 6 can penetrate with an appropriate margin. Referring to an example of specific dimensions, if the sheet thickness of the mountain-shaped cutting portion 6 is set to about 60 mm, the inner size of the through portion 2 in the width direction thereof will be about 70 mn. This dimensional relationship is determined by considering the thickness of the mountain-shaped cutting portion 6 as a reference dimension, and if the thickness of the mountain-shaped cutting portion 6 changes, the inner size of the through portion 2 in the width direction thereof will also change appropriately.

As for the operation of causing the mountain-shaped cutting portion 6 to penetrate into the through portion 2, the cutting edge 6t of the mountain-shaped cutting portion 6 penetrates into the through portion 2 so as to reach a certain intermediate level in the depth direction thereof or bites into the packing material Wo (see FIG. 1B). However, for certain types or states of industrial wastes which are to be handled, a structure can be used in which the cutting edge 6t of the mountain-shaped cutting portion 6 reaches the vicinity of the opening at the outer side of the fixed jaw A inside the through portion 2.

In this cutting unit 5, in addition to the aforesaid mountain-shaped cutting portion 6, an auxiliary cutting portion 7 is formed adjacently to the mountain-shaped cutting portion 6 in the location closer to the swinging center of the movable cutting body B. The auxiliary cutting portion 7 has a linear cutting edge in the longwise direction of the cutting portion and does not penetrates into the movable cutting body B, but it cuts the material W protruding in the locations other than the through portion 2 in the cutting operation surface 1a.

The drive portion casing C is composed of a casing portion 9 and a connecting portion 10. A hydraulic cylinder 12 is installed in si de th e casing p ort io n 9 . Furthermore, the connecting portion 10 also serves for mounting on the distal end of a construction vehicle boom 22 such as a hydraulic shovel. Swinging action of the movable cutting body B with respect to the fixed jaw A is implemented by the hydraulic cylinder 12. More specifically, the movable cutting body is pivotally connected in the pivot portion S₁ to the drive portion casing C so that it can be swung together with the cylinder portion 12a of the hydraulic cylinder 12. Furthermore, the cylinder connection portion 8c formed in the movable frame 8 of the movable cutting body B is pivotally connected in a pivot portion S₂ to a piston rod 12b of the hydraulic cylinder 12, and the movable cutting body B is caused to swing with respect to the fixed jaw A when the piston rod 12b is protruded from the cylinder portion 12a of the hydraulic cylinder 12 and withdrawn therein (see FIGS. 1A, 1B).

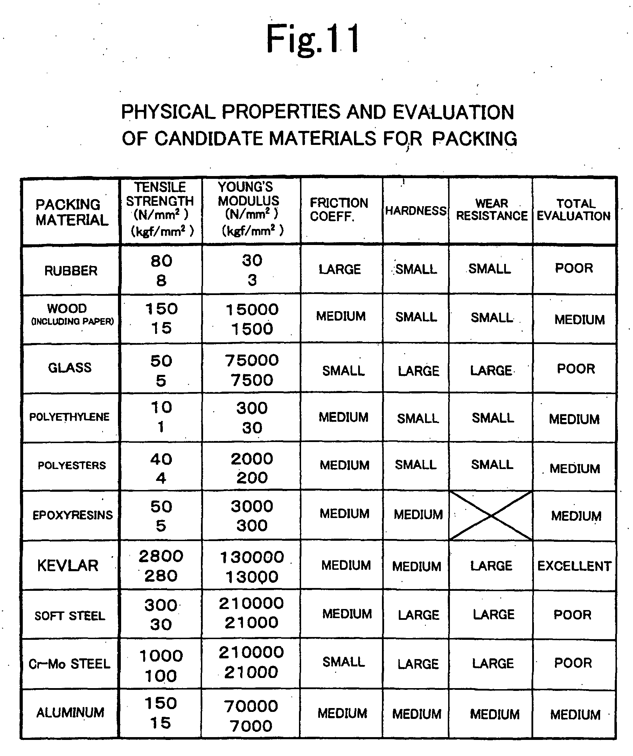

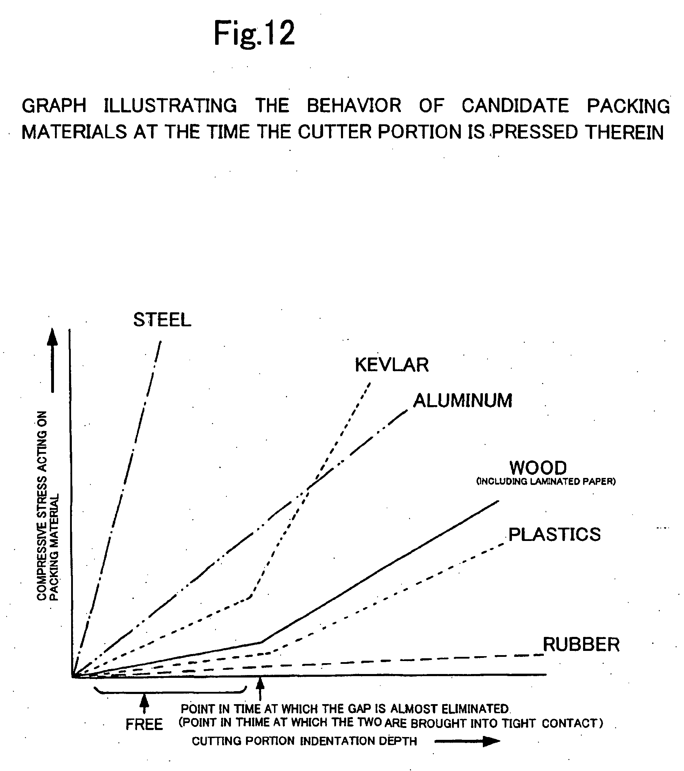

Further, when cutting of material W is to be conducted, the packing material Wo is packed in advance into the through portion 2. The packing material provides counterforce to the mountain-shaped cutting portion 6 with respect to the mountain-shaped cutting portion 6 that penetrated into the through portion 2. More specifically, the packing material assumes a state in which it applies a pressure by an appropriate pushing force to the sections on both surfaces of the cutting edge. The properties which are required for the packing material Wo include large compressive strength, friction coefficient wear resistance, and the like, and the material with small elongation and hardness is preferred. Examples of actually preferred materials include rubber, paper, polyethylene, polyesters, epoxy resins, and Kevlar. Furthermore, the desirable properties of the packing materials Wo are shown in the table in FIG. 11 and the graph in FIG. 12. Kevlar is a material used for bulletproof vests and is especially strong.

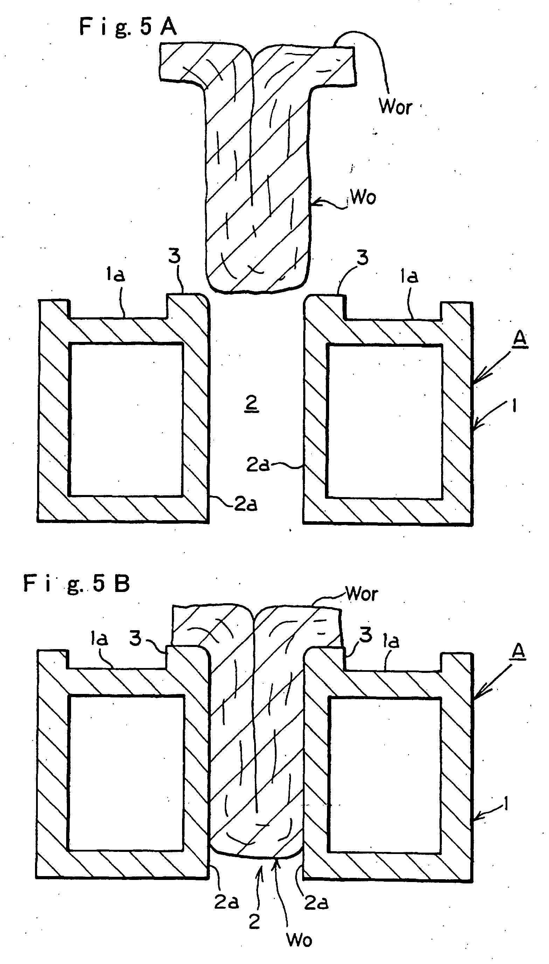

Furthermore, as shown in FIGS. 3A, 4B, and 5, the packing material Wo has an almost T-like cross-sectional shape. More specifically, an exposed portion Wor is formed such that the upper part of the packing material Wo protrudes at both sides in the width direction. Further, as shown in FIGS. 5A, B, when the packing material Wo is packed into the through portion 2, the exposed portion Wor is placed on the cutting operation surfaces 1a, 1a (more specifically, on the cutting support members 3, 3), the packing material Wo is installed in a stable state in the through portion 2 so that it cannot fall easily therefrom, and the cutting op era ti on is improved.

As for the properties required for the packing material Wo, it is preferred that this material have pores at an appropriate ratio. Thus, it is required to have an appropriate porosity. The porosity indicates compressibility when an external load such as pressure or the like is applied to the material. As a result, when the packing material Wo packed into the through portion 2 serves as a cutting base of the mountain-shaped cutting portion 6 in the course of cutting operation, if the packing material Wo has an appropriate porosity, the increase ratio of the counterforce R of the packing material Wo to the mountain-shaped cutting portion 6 when the mountain-shaped cutting portion 6 penetrates to a certain degree into the packing material Wo in the through portion 2 will increase. Usually, the porosity is preferably from about 3% to about 30%. The graph shown in FIG. 12 represents the relation between compression and strain of the packing material Wo, and Kevlar, wood (paper), and plastics are presented as materials with a large porosity.

The preferred mechanical characteristics of the packing material Wo include a compressive strength of 300 N/mm² to 1000 N/mm² and a Young's modulus of 300 N/mm² to 5000 N/mm². Examples of materials with such properties include paper, plastic sheets, and cloth. The packing material Wo having such properties is elastically deformed when the mountain-shaped cutting portion 6 bites therein, and when the penetration of the mountain-shaped cutting portion 6 reaches a certain advanced state, the packing material does not deform anymore ( see FIG. 12) and stops the shear force F from the mountain-shaped cutting portion 6, thereby conducting cutting of the material W which is to be cut. As a result, a very effective cutting operation can be conducted.

It is especially preferred that the packing material Wo have a large friction coefficient. Furthermore, using a sheet-like material makes it possible to obtain a variety of shapes and is preferred from the standpoint of packing into the through portion 2. Furthermore, when the packing material Wo sticks inside the through portion 2, it cannot easily fall therefrom. Examples of materials with such properties include synthetic resins such rubbers and vinyl polymers, fabric, and paper. Paper and cotton wastes are convenient because they are generally available at the work site. The packing materials Wo with appropriate friction characteristics and elasticity are provided as commercial products, but wastes such as appropriate sheet materials can be also used at the work site.

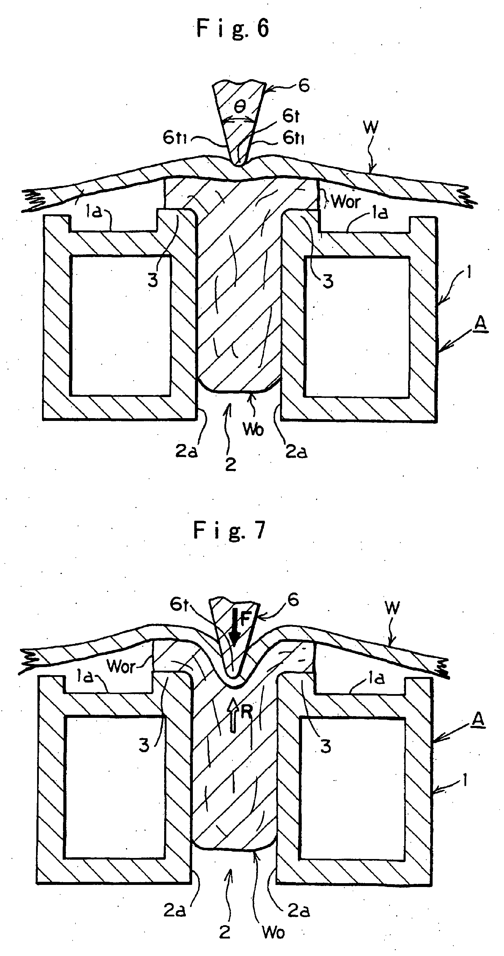

A method for cutting the industrial wastes (materials which are to be cut) with the industrial waste cutting apparatus in accordance with the present invention will be described hereinbelow with reference to FIGS. 5 through 10. First, the industrial waste cutting apparatus is mounted on the distal end of a boom 22 of a construction vehicle such as a hydraulic shovel. The swinging operation of the movable cutting body B with respect to the fixed jaw A can be carried out by an operator from the construction vehicle. First, a case of cutting operation will be considered in which soft thick industrial wastes (materials which are to be cut) such as sheet materials, hoses, nets, glass wool mats, and rubber materials are cut.

First, as shown in FIGS. 5A, 5B, the packing material Wo is packed into a through portion 2 of the fixed jaw A. The packing material Wo is in the form of a sheet and fully penetrates into the through portion, reaching the vicinity of the cutting operation surface 1a of the through portion 2. The exposed portion Wor of he packing material Wo is placed on the apex of the cutting support members 3, 3. Then, a structure is obtained in which the packing material is caused to adhere under the effect of resistance from both inner wall surfaces 2a, 2a in the width direction of through portion 2. Thus, the packing material is prevented from falling down from the through portion 2 under the effect of a certain pushing force. In this case, if the resistance surfaces 2a₁, 2a₁ have been formed on the two inner wall surfaces 2a, 2a, the material W which is to be cut can be caused to adhere tightly to the resistance surfaces 2a₁, 2a₁.

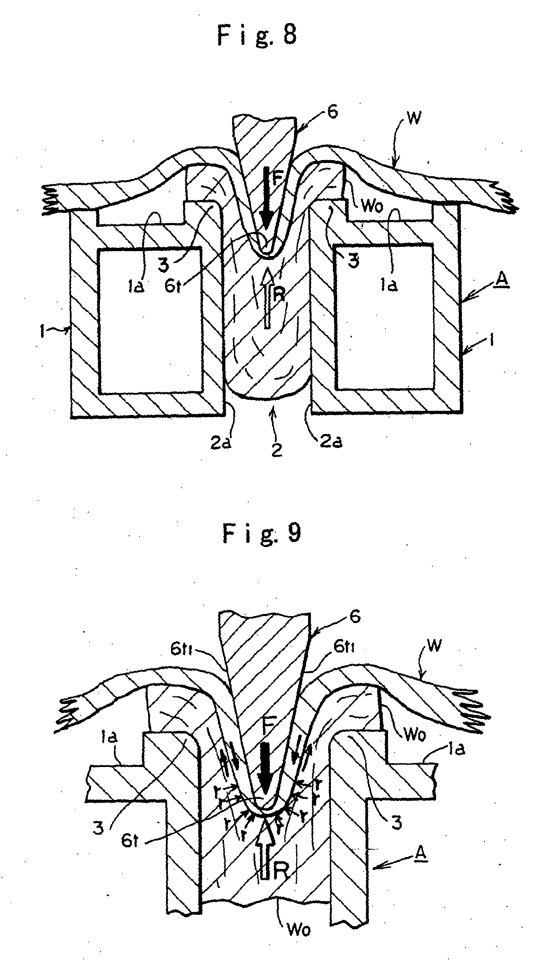

The material W which is to be cut is then sandwiched between the fixed jaw A and the movable cutting body B and the movable cutting body B is caused to swing and close toward the fixed jaw A. Under the effect of the moun ta in- sh ape d cut ti ng portion 6, a counterforce R from the packing material Wo is applied to the material W, which is to be cut, above the packing material Wo inside the through portion 2, and the material W is cut. More specifically, if the mountain-shaped cutting portion 6 penetrates into the through portion 2, the counterforce R increases with respect to the shear force F, a friction force acts between the packing material Wo located inside the through portion 2 and the material W (material which is to be cut), and a tension force is applied to the material W. As a result, the cutting edge 6t of the mountain-shaped cutting portion 6 applies a concentrated shear force F to the material W, and the material W can be compressed and cut (see FIGS. 8 and 9). Furthermore, the counterforce from the material W, W... packed inside the through portion 2 and acting against the shear force F of the mountain-shaped cutting portion 6 acts as distributed loads r, r... on the periphery of the cutting edge 6t. The counterforce R is shown in the figure as those distributed loads r, r ... concentrated at the cutting edge 6t.

Further, in the above-described cutting operation, each time the material W is cut, the packing material Wo located inside the through portion 2 is discharged by small portions from the through portion 2 to the outside of the fixed jaw A under the effect of a pushing pressure created by the shear force F of the mountain-shaped cutting portion 6. Therefore, even if the cutting operation continues, the uniformly packed state is maintained all the time, without the amount of the packing material Wo inside the through portion 2 being increased to above a constant level.

Further, the packing material Wo located inside the through portion 2 is gradually discharged from the through portion 2 by the cutting operation of multiple materials W, W, ... . Then, each time the materials W, W, ... are cut, they gradually penetrate into the through portion 2 and serve as a new packing material Wo.

Further, if the through portion 2 is set so that it widens gradually in the downward direction of the fixed jaw A, as shown in FIGS. 13A, 13B, the stuffed materials W, W, ... can be discharged easily, and the shear force F of the mountain-shaped cutting portion 6 can be somewhat weakened. Furthermore, if the through portion is set so that it narrows gradually in the downward direction of the fixed jaw A, as shown in FIGS. 14A, 14B, the discharge of the stuffed materials W, W, ... is suppressed, the counterforce R to the shear force F of the mountain-shaped cutting portion 6 is increased, and the shear force F can be then slightly increased.

As a result, it is possible to prevent the materials W, W, ... from stuffing excessively the through portion 2 and condensing and hardening therein, thereby allowing the mountain-shaped cutting portion 6 to penetrate into the through portion 2 and making it possible to cut the material W. Thus, because the through portion 2 has a shape such that this portion goes through from the cutting operation surface 1a of the fixed jaw A to the outside of the fixed jaw A, the quantity of the materials W, W, ... that are stuffed in the through portion 2, can be maintained at a constant level all the time.

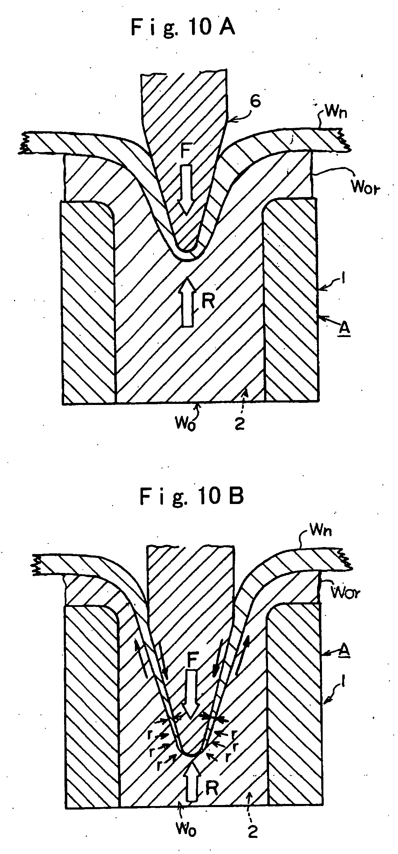

The cutting structure created by the ab ove -d esc ri bed mountain-shaped cutting portion 6 and the materials W, W, ... stuffed in the through portion 2 is shown schematically in FIG. 10. Thus, this figure shows that the materials W, W, ... stuffed in the through portion 2 play the role of a cutting base in the cutting operation of the mountain-shaped cutting portion 6 and represents the operation diagram describing the state at the time of shearing the material W with the mountain-shaped cutting portion 6 and the stresses applied to each portion.

FIG. 10A shows how the material W, which is to be cut, bi te s to a certain level into the packing material Wo located inside the through portion 2, the when cutting is to be carried out with the mountain-shaped cutting portion 6. FIG. 10B shows a state in which the cutting edge 6t of the mountain-shaped cut ti ng po rti on 6 applies a concentrated compressive stress to the material W due to the stresses generated in each location and cuts this material.

The above-described cutting action was explained with reference to a soft and thick material W, which is to be out, but almost identical cutting process is realized in cutting of a soft and thin material W, which is to be cut. Thus, as shown in FIG. 14B, the shear force F of the mountain-shaped cutting portion 6 is concentrated at the cutting edge 6t and the material W, which is to be cut, is cut by the compressive stresses created by the cutting edge 6t and counterforce R of the packing material Wo in the through portion 2.

Further, the material W, which is to be cut, was manufactured from a metal, a synthetic resin, a hard rubber, or the like. For example, in the case of plates, furniture, household electric devices, and tatami, the material W is comparatively hard and has a stable shape which is difficult to deform. Therefore, cutting can be conducted in a stable state, such that the material W is not tangled with the mountain-shaped cutting portion 6 in the cutting operation, and cutting can be carried out by almost single-cycle cutting operations.

### INDUSTRIAL APPLICABILITY

The present invention provides an industrial waste cutting apparatus for cutting fi nel y the industrial wastes generated from such as industrial products of a great variety of types and domestic products such as used materials and old furniture, regardless of whether they are soft or hard, so that they can be easily disposed off. This apparatus can cut soft materials, which are especially difficult to cut, with a very high efficiency and is suitable for industrial applications.

## Claims

1. An industrial waste cutting apparatus comprising:
a fixed jaw provided with a through portion;
a movable cutting body which comprises a mountain-shaped cutting portion that penetrates to an intermediate location in the depth direction of said through portion and which is free to swing with respect to said fixed jaw; and
a packing material which is packed into said through portion, allows said mountain-shaped cutting portion to penetrate into said through portion, and can apply a pressure with an appropriate pressing force to both sides sections of a cutting edge of said mountain-shaped cutting portion.

2. The industrial waste cutting apparatus according to claim 1, wherein two inner wall surfaces in the width direction of said through portion are formed so as to expand slightly from the penetration side of said mountain-shaped cutting portion in the downward direction of the fixed jaw.

3. The industrial waste cutting apparatus according to claim 1, wherein two inner wall surfaces in the width direction of said through portion are formed so that the portion narrows slightly from the penetration side of said mountain-shaped cutting portion in the downward direction of the fixed jaw.

4. The industrial waste cutting apparatus according to claim 1, 2, or 3, wherein the cross-sectional shape of the cutting edge of said mountain-shaped cutting portion is formed to be sharp at the same slope angle at the two cutting edge surfaces in the width direction.

5. The industrial waste cutting apparatus according to claim 1, 2, 3, or 4, wherein the two inner wall surfaces of said through portion serve as resistance surfaces.

6. The industrial waste cutting apparatus according to claim 1, 2, 3, 4, or 5 wherein an auxiliary cutter is provided in the vicinity of the pivot portion of said movable cutting body and fixed jaw.

7. The industrial waste cutting apparatus according to claim 1, 2, 3, 4, 5, or 6 wherein said mountain-shaped cutting portion is formed to have an almost arc-wise shape along the cutter length direction.

8. The industrial waste cutting apparatus according to claim 1, 2, 3, 4, 5, or 6 wherein said mountain-shaped cutting portion is farmed to have an almost polygonal shape along the cutter length direction.

9. The industrial waste cutting apparatus according to claim 1, 2, 3, 4, 5, or 6 wherein said mountain-shaped cutting portion is formed to have an almost triangular shape along the cutter length direction.

10. The industrial waste cutting apparatus according to claim 1, 2, 3, 4, 5, 6, 7, 8, or 9 wherein said packing material is composed of a material with a large friction coefficient.

11. The industrial waste cutting apparatus according to claim 1, 2, 3, 4, 5, 6, 7, 8, 9, or 10, wherein said packing material has a compressive strength of 300 N/mm² to 100 0 N/mm² and a Young's modulus of 300 N/mm² to 5000 N/mm².

12. The industrial waste cutting apparatus according to claim 1, 2, 3, 4, 5, 6, 7, 8, 9, 10, or 11 wherein said packing material is a sheet-like member.

13. A cutting method with an industrial waste cutting apparatus, comprising the steps of:
packing a packing material which allows a mountain-shaped cutting portion to penetrate into a through portion and can apply a pressure with an appropriate pressing force to both sides sections of a cutting edge of said mountain-shaped cutting portion in an industrial waste cutting apparatus comprising a fixed jaw provided with said through portion and a movable cutting body which comprises said mountain-shaped cutting portion that penetrates to an intermediate location in the depth direction of said through portion and which is free to swing with respect to said fixed jaw;
sandwiching a material W, which is to be cut, between said fixed jaw and movable cutting body;
allowing the mountain-shaped cutting portion to penetrate in to said through portion;
placing the material, which is to be cut, on said packing material; and
cutting said material, which is to be cut, with the mountain-shaped cutting portion.
